# EUROPÄISCHE PATENTANMELDUNG

(11) **EP 0 590 297 A1**
(43) Veröffentlichungstag der Anmeldung: **06.04.1994**
(21) Anmeldenummer: 93113414.2
(22) Anmeldetag: 23.08.1993
(51) Int. Cl.: F23R 3/58, F23R 3/42, F01D 9/02, F01D 1/18

(54) **Gasturbogruppe**

(30) Priorität: 26.09.1992 DE 4232383
(71) Anmelder: ASEA BROWN BOVERI AG, CH-5401 Baden (CH)
(72) Erfinder: Häusermann, Alfred, CH-5415 Rieden (CH); Wettstein, Hans, Dr., CH-5442 Fislisbach (CH)
(74) Vertreter: Klein, Ernest

(57) **Zusammenfassung**

Bei einer Gasturbogruppe wird die Brennkammer in der Ausgestaltung als Ringbrennkammer (1) zwischen zwei Strömungsmaschinen (2, 3) plaziert. Im Normalfall ist die stromauf der Ringbrennkammer (1) gelegene Strömungsmaschine (2) ein Verdichter (2b), und die stromab der Ringbrennkammer (1) gelegene Strömungsmaschine (3) eine Turbine. Die stromab der Ringbrennkammer (1) gelegene Strömungsmaschine weist dabei keine erste Leitschaufelreihe auf, sondern ihre Beschaufelung beginnt gleich mit einer Laufschaufelreihe (6). Diese wird durch den Drall aus der stromauf der Ringbrennkammer (1) gelegenen Strömungsmaschine (2) beaufschlagt. Der Drall selbst konserviert sich über die ganze Länge der Ringbrennkammer (1), wobei durch den Drall vollführt die Gasströmung eine schraubenförmige Bewegung in axialer Strömungsrichtung der Ringbrennkammer (1).

## Beschreibung

### Technisches Gebiet

Die vorliegende Erfindung betrifft eine Gasturbogruppe gemäss Oberbegriff des Anspruchs 1.

### Stand der Technik

Bei der Auslegung der neueren Brennkammer-Generation, beispielsweise als Ringbrennkammer, strebt man an, die Baulänge soweit zu minimieren, um daraus eine möglichst hohe Wellenstabilität anzustreben. Bei dieser Minimierrung stellt man aber unmittelbar fest, dass für den nötigen Ausbrand an sich eine zu kurze Zeitspanne zur Verfügung steht, so dass mit einer solchen Auslegung entscheidende Nachteile hinsichtlich des Wirkungsgrades sowie der Schadstoff-Emissionen eingehandelt werden.

### Darstellung der Erfindung

Hier will die Erfindung Abhilfe schaffen. Der Erfindung, wie sie in den Ansprüchen gekennzeichnet ist, liegt die Aufgabe zugrunde, bei einer Gasturbogruppe der eingangs genannten Art, die Verweilzeit der Gasteilchen im Brennraum zu maximieren, ohne dabei die Konfiguration der Brennkammer entscheidend zu verändern.

Eine längere Verweilzeit der Gasteilchen bei Vorgabe einer minimierten Länge des effektiven Brennraumes lässt sich erreichen, indem der Gasströmung eine schraubenförmige Drallbewegung aufgezwungen wird, welche gegenüber einer reinen Durchlaufbewegung der Gasteilchen durch den Brennraum eine entscheidende Verlängerung der Durchlaufzeit mit sich bringt.

Zur Erzielungh einer solchen Bewegung wird vorgeschlagen, den Austrittsdrall aus der stromauf der Brennkammer geschalteten Strömungsmaschine nicht durch eine dort wirkende Nachleitschaufelreihe aufzuheben, sondern ihn in den Brennraum zu überführen, und wenn erforderlich, ihn sogar zu verstärken.

Die wesentlichen Vorteile der Erfindung sind darin zu sehen, dass auf die letzte Nachleitschaufelreihe der stromauf der Brennkammer wirkenden Strömungsmaschine zunächst verzichtet wird. Dadurch wird erreicht, dass die vorhandene Drallbewegung in dieser Strömungsmaschine, vorgegeben durch die letzte Laufschaufelreihe der stromauf der Brennkammer wirkenden strömungsmaschine, in den Brennraum übergeht und sich dort bei gleichem Geschwindigkeitsvektor schraubenförmig fortsetzt und erhalten bleibt, dergestalt, dass daraus Vorteile bezüglich des Ausbrandes und der Schadstoff-Emissionen resultieren.
Selbstverständlich ist es auch möglich, die drallbewegungerzeugenden Schaufeln unmittelbar vor der Brennkammer zu plazieren, was bei konventionellen Gasturbogruppen angezeigt erscheint.

Ein weiterer Vorteil der Erfindung ist darin zu sehen, dass die erste Leitschaufelreihe der stromab der Brennkammer geschalteten Strömungsmaschine gänzlich entfällt, denn die Bedingungen für den Eintritt des Gasstromes in die erste Laufschaufelreihe dieser Strömungsmaschine werden von der Drallbewegung im Brennraum erfüllt.

Ein weiterer Vorteil der Erfindung ist darin zu sehen, dass die Dislokation des Drallerzeugers von einem heisseren stromab der Brennkammer gelegenen Ort an einen kühleren stromauf derselben gelegenen Ort eine signifikante Reduktion des Kühlluftverbrauches mit sich bringt, was sich auf den Wirkungsgrad der Anlage äusserst positiv auswirkt, denn höhere ISO-Temperaturen bei gleicher Heissgastemperatur sind dadurch möglich.

Ein weiterer Vorteil der Erfindung ist darin zu sehen, dass die Anströmung der ersten Laufschaufelreihe der stromab der Brennkammer geschalteten Strömungsmaschine eine gleichmässigere ist.

Vorteilhafte und zweckmässige Weiterbildungen der erfindungsgemässen Aufgabenlösung sind in den abhängigen Ansprüchen gekennzeichnet.

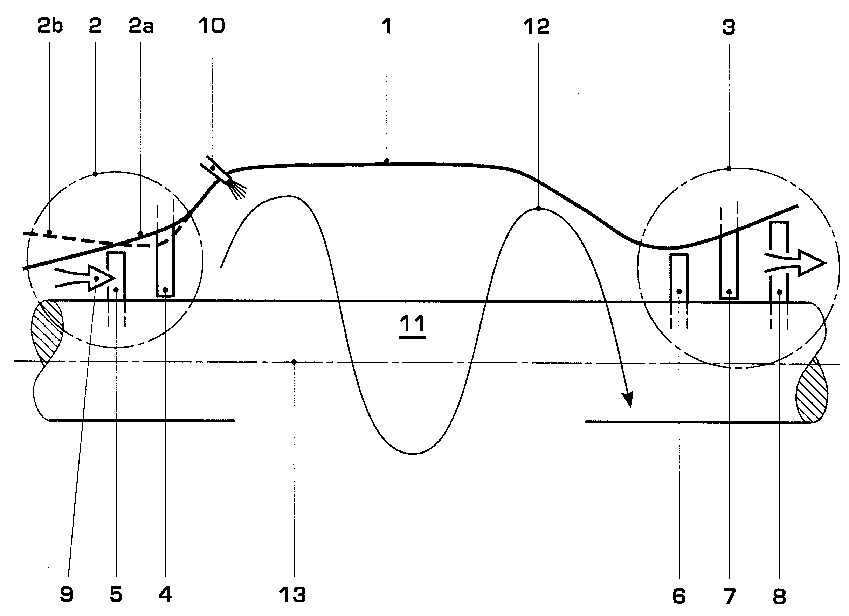

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung des Mediums ist mit Pfeilen angegeben.

### Kurze Beschreibung der Zeichnung

Die einzige Figur zeigt schematisch eine typische Ringbrennkammer mit stromauf und stromab geschalteten Strömungsmaschinen.

### Wege zur Ausführung der Erfindung, gewerbliche Verwertbarkeit

Die in der Figur dargestellte Ringbrennkammer 1 erstreckt sich zwischen einer ersten stromauf geschalteten Strömungsmaschine 2 und einer zweiten stromab geschalteten Strömungsmaschine 3. Die Strömungsmaschinen 2, 3 und die Ringbrennkammer 1 liegen vorzugsweise auf einer gemeinsamen Rotorwelle 11. Was die Natur der ersten Strömungsmaschine 2 betrifft, so kann diese ein Verdichter 2b einer Gasturbogruppe oder auch, beispielsweise, eine Hochdruck-Gasturbine einer Kraftwerksanlage, beispielsweise einer Kombianlage, sein. Die stromab der Ringbrennkammer 1 gelegene Strömungsmaschine 3 ist eine Gasturbine, beispielsweise eine Hochdruck- oder Niederdruck-Turbine. Die Länge der Brennkammer 1 ist an sich, im Lichte des zur Verfügung stehenden Platzes, maximiert, um die Verweilzeit der Gasteilchen ebenfalls zu maximieren, wobei, wie später noch zur Ausführung gelangen wird, in der Brennkammer, ab Strömungsmaschine 2, der Gasströmung eine schraubenförmige Drallbewegung vorgegeben wird. Nach der letzten Laufschaufelreihe 5 in der Strömungsmaschine 2 wird nur bei Bedarf eine Nachleitschaufelreihe 4 vorgesehen, zunächst unabhängig, ob diese Strömungsmaschine 2 ein Verdichter oder eine Turbine ist. Auf diese Nachleitschaufelreihe 4 wird immer dann verzichtet, wenn die Gasströmung aus der letzten Laufschaufelreihe 5 der Strömungsmaschine 2 mit einem genügend starken Drall in die Ringbrennkammer 1 entlassen wird. Somit dient die wahlweise vorgesehene Nachleitschaufelreihe 4 in Strömungsmaschine 2 eine allenfalls notwendige Erhöhung des Dralls, damit er über die ganze Länge der Ringbrennkammer 1 in genügender Stärke vorliegt. Durch den Drall vollführt die Gasströmung eine schraubenförmlge Bewegung 12 in axialer Strömungsrichtung 9 der Ringbrennkammer 1, dergestalt, dass die zurückgelegte Strecke eines jeden Gasteilchens zwischen erster Strömungsmaschine 2 und zweiter Strömungsmaschine 3 eine längere ist, als wenn die Gasströmung rein axial die Ringbrennkammer 1 durchströmen würde, wobei zu berücksichtigen ist, dass die bei axialer Durchströmung auftretende Strömungsgeschwindigkeit bei der schraubenförmigen Strömung möglichst nicht überschritten wird, was einen grösseren Brennkammerdurchströmungsquerschnitt erfordert. Danebst ist darauf hinzuweisen, dass sich die Drallbewegung positiv bezüglich einer intensiven Vermischung mit dem unmittelbar stromab der ersten Strömungsmaschine 2 in die Ringbrennkammer 1 eingedüsten Brennstoff 10 auswirkt. Die stromab der Ringbrennkammer 1 geschaltete Strömungsmaschine 3 weist an ihrem Eintritt keine erste Leitschaufelreihe mehr auf, sondern sie beginnt mit einer Laufschaufelreihe 6. Anschliessend ist die Strömungsmaschine 3 als Turbine konventionell ausgestaltet, d.h., es folgen Leitschaufelreihe 7, Laufschaufelreihe 8, etc.. Durch die Dislokation des Drallerzeugers für die Strömungsmaschine 3 stromab der Ringbrennkammer 1 an einen Ort stromauf derselben wird auf den Kühlluftverbrauch in signifikanter Weise eingegriffen. Dadurch, dass der Drallerzeuger nunmehr an einem Ort tieferer Temperatur wirkt, wird der Kühlluftverbrauch minimiert. Damit sind höhere ISO-Temperaturen bei gleicher Heissgastemperatur möglich. Eine Möglichkeit die Drallstärke bei konstanter Geschwindigkeit der Strömung zunehmen zu lassen, besteht darin, die Ringbrennkammer 1 in Strömungsrichtung mit einem degressiven mittleren Radius zu versehen, d.h., die Ringbrennkammer 1 bei gleichem Durchflussquerschnitt gegenüber der Mittelachse 13 der Maschine konisch in Strömungsrichtung zu gestalten. Wird nach einer ersten Strömungsmaschine aus strömungstechnischen Aspekten ein Diffusor vorgesehen, so wird vorzugsweise die Nachleitschaufelreihe 4 nach demselben Diffusor vorgesehen.

### Bezeichnungsliste

- 1: Ringbrennkammer
- 2: Erste Strömungsmaschine
- 2a: Turbine
- 2b: Verdichter
- 3: Zweite Strömungsmaschine
- 4: Nachleitschaufelreihe
- 5: Letzte Laufschaufelreihe der ersten SM
- 6: Laufschaufelreihe der zweiten SM
- 7: Leitschaufelreihe der zweiten SM
- 8: Laufschaufelreihe der zweiten SM
- 9: Strömungsrichtung
- 10: Brennstoffeindüsung
- 11: Rotorwelle
- 12: Schraubenförmige Bewegung
- 13: Mittelachse

## Patentansprüche

1. Gasturbogruppe, bestehend aus einer ersten und einer zweiten Strömungsmaschine und aus mindestens einer dazwischen geschalteten Brennkammer, dadurch gekennzeichnet, dass die zweite Strömungsmaschine (3) keine erste Leitschaufelreihe aufweist, dass die erste Laufschaufelreihe (6) der zweiten Strömungsmaschine (3) mit dem Drall aus der ersten Strömungsmaschine (2) beaufschlagbar ist.

2. Gasturbogruppe nach Anspruch 1, dadurch gekennzeichnet, dass die erste Strömungsmaschine (2) ein Verdichter (2b) und die zweite Strömungsmaschine (3) eine Turbine ist.

3. Gasturbogruppe nach Anspruch 1, dadurch gekennzeichnet, dass die erste Strömungsmaschine (2) und die zweite Strömungsmaschine (3) Turbinen sind.

4. Gasturbogruppe nach einem der Ansprüche 1-3, dadurch gekennzeichnet, dass die Verstärkung und/oder die Richtung des Dralles der letzten Laufschaufelreihe (5) der ersten Strömungsmaschine (2) durch eine ihr nachgeschaltete Nachleitschaufelreihe (4) erreichbar ist.

5. Gasturbogruppe nach den Ansprüchen 1-4, dadurch gekennzeichnet, dass die Brennkammer (1) eine Ringbrennkammer ist, die sich axial oder quasi-axial zwischen der ersten und zweiten Strömungsmaschine (2, 3) erstreckt.

6. Gasturbogruppe nach Anspruch 5, dadurch gekennzeichnet, dass die Ringbrennkammer (1) in Strömungsrichtung bei gleichem Durchflussquerschnitt einen degressiven mittleren Radius aufweist.

7. Gasturbogruppe nach den Ansprüchen 1-4, dadurch gekennzeichnet, dass die Brennkammer aus einem oder mehreren ringförmig angeordneten Brennräumen besteht, welche zwischen der ersten und der zweiten Strömungsmaschine (2, 3) so angeordnet sind, und dass der in der ersten Strömungsmaschine (2) gebildete Drall bis zur Beaufschlagung der zweiten Strömungsmaschine (3) erhalten bleibt.

8. Gasturbogruppe nach Anspruch 7, dadurch gekennzeichnet, dass mehrere am Umfang angeordnete Einzelbrennräume zur Drallübertragung eine schraubenförmige Konfiguration aufweisen.
